Europäisches Patentamt

European Patent Office

Office européen des brevets

(19)

(11) Veröffentlichungsnummer: **0 001 040**
**B1**

(12) **EUROPÄISCHE PATENTSCHRIFT**

(21) Anmeldenummer: **78100366.0**

(22) Anmeldetag: **11.07.78**

(51) Int. Cl.³: **C 08 F 220/06,** //
**C 08 F 220/06, 236/04,
222/14, C 09 D 7/00**

(54) Verfahren zur Herstellung von Mischpolymerisaten als viskositätserhöhende Mittel

(30) Priorität: **03.09.77 DE 2739761**

(43) Veröffentlichungstag der Anmeldung:
**21.03.79 Patentblatt 79/06**

(45) Bekanntmachung des Hinweises auf die Patenterteilung:
**23.07.80 Patentblatt 80/15**

(84) Benannte Vertragsstaaten:
**FR GB NL SE**

(56) Entgegenhaltungen:
**DE - A - 2 250 977
, FR - A - 2 091 533**

(73) Patentinhaber: **Chemische Werke Huls AG
Postfach 1320
D - 4370 Marl 1 (DE)**

(72) Erfinder: **Türck, Ulrich, Dr.
Gersthofener Strasse 20
D - 4370 Marl (DE)**

Courier Press, Leamington Spa, England.

Verfahren zur Herstellung von Mischpolymerisaten als viskositätserhöhende Mittel

Gegenstand der Erfindung ist ein Verfahren zur Herstellung von Mischpolymerisaten auf der Basis von Methacrylsäure, einem konjugierten Diolefin und dem Ester einer $\alpha,\beta$-ethylenisch ungesättigten Dicarbonsäure bei erhöhter Temperatur als viskositätserhöhendes Mittel.

Viskositätserhöhende Mittel (Verdickungsmittel) sind als Hilfsstoffe in Überzugsmitteln für z.B. die Papier- und Textiltechnologie bekannt. Diese Mittel können sowohl natürliche als auch synthetische Stoffe zur Grundlage haben. Diese Syntheseprodukte sind technisch besonders interessant, da sie in gleichbleibender Qualität anfallen.

Eine Gruppe von synthetischen Produkten sind Dispersionen von Mischpolymerisaten, hergestellt aus einem konjugierten Diolefin und Methacrylsäure sowie gegebenenfalls Estern von $\alpha,\beta$-ungesättigten Dicarbonsäuren. So beschreibt z.B. DE-A- 2 035 919 Dispersionen aus Copolymeren von Butadien und einer ungesättigten Carbonsäure als Verdickungsmittel. Nachteilig für die Produkte wirkt sich aus, da die Polymerisation der in der Druckschrift genannten Dispersionen infolge einer hohen Wärmeentwicklung nur sehr schlecht beherrscht werden kann.

Ferner sind aus DE-A 2 025 696 und 2 250 977 Verdickkungsmittel auf Dispersionsbasis bekannt. Es handelt sich hierbei um mindestens Terpolymere von Butadien, einer ungesättigten Carbonsäure sowie Halbestern von $\alpha,\beta$-ungesättigten Dicarbonsäuren. Wesentlicher Nachteil dieser Produkte ist die Tatsache, daß die Estermonomeren eigens hergestellt werden müssen, da sie kein marktgängiges Produkt darstellen. Dadurch werden diese Verdickungsmittel unwirtschaftlich.

Aufgabe der vorliegenden Erfindung war es, ein Herstellungsverfahren für Verdickungsmittel zu finden, die mit marktgängigen Produkten großtechnisch gut und wirtschaftlich hergestellt werden können und die eine ausgezeichnete viskositätserhöhende Wirkung zeigen.

Die Aufgabe wurde dadurch gelöst, daß 50 bis 60 Gewichtsprozent Methacrylsäure, 15 bis 49 Gewichtsprozent eines konjugierten Diolefins und 1 bis 25 Gewichtsprozent Fumarsäure — und/oder Maleinsäuredialkylester — mit 1 bis 8 C-Atomen in der Alkholkomponente in wäßriger Emulsion bei einem Phasenverhältnis Monomerengemisch:Wasser von 1:1,7 bis 1:2,5 bei Temperaturen im Bereich von 35°C bis 60°C miteinander polymerisiert werden, wobei-bezogen auf den Monomerengehalt-die wäßrige Phase 0,02 bis 1 Gewichtsprozent einer basischen Verbindung, 0,05 bis 1 Gewichtsprozent eines Initiators, 0,01 bis 1 Gewichtsprozent eines Reglers sowie 0,1 bis 5 Gewichtsprozent eines Emulgators enthält.

In einer bevorzugten Arbeitsweise wurde die Aufgabe dadurch gelöst, indem 53 bis 57 Gewichtsprozent Methacrylsäure, 28 bis 42 Gewichtsprozent Butadien und 5 bis 15 Gewichtsprozent Fumarsäuredibutylester in wäßriger Emulsion bei einem Phasenverhältnis Monomerengemisch:Wasser von 1:1,8 bis 1:2,3 miteinander polymerisiert werden, wobei-bezogen auf den Monomerengehalt-die wäßrige Phase 0,05 bis 0,5 Gewichtsprozent einer organischen, stickstoffhaltigen basischen Verbindung, 0,3 bis 0,8 Gewichtsprozent eines Initiators, 0,05 bis 0,5 Gewichtsprozent t-Dodecylmercaptan als Regler sowie 0,5 bis 3 Gewichtsprozent eines Alkylbenzosulfonats als Emulgator, enthält.

Als konjugiertes Diolefin wird bevorzugt Butadien eingesetzt. Es können jedoch auch andere 1.3-Diolefine wie Isopren, Chloropren oder Piperylen oder Gemische davon, verwendet werden. Die bevorzugten Mengen liegen im Bereich von 28 bis 42 Gewichtsprozent.

Als weitere Monomere werden Fumarsäure- und/oder Maleinsäuredialkylester eingesetzt. Als Alkohole für die Ester kommen u. a. Ethanol, Butanol, Hexanol, 2-Ethylhexanol, vorzugsweise Butanol, in Frage. Für das erfindungsgemäße Verfahren werden die Ester bevorzugt in Mengen von 5 bis 15 Gewichtsprozent eingesetzt. Als besonders vorteilhaft hat sich Fumarsäuredibutylester erwiesen.

Mit Hilfe der Esterkomponente wird es u. a. mögliche, die bei dem bekannten System Butadien/Methacrylsäure sehr hohe, freiwerdende Polymerisationswärme/Zeiteinheit auf ein für die Praxis vertretbares Maß zu senken. Diese Senkung macht es möglich, in Großreaktoren (>20 m³) zu polymerisieren. Ein weiterer Vorteil der nach dem erfindungsgemäßen Verfahren hergestellten Verdickungsmittel ist ihre-im Vergleich zum Stand der Technik-stärkere viskositätserhöhende Wirkung.

Die dritte Monomerkomponente ist Methacrylsäure, die bevorzugt zu etwa 53 bis 57 Gewichtsprozent eingesetzt wird. Liegt der Methacrylsäureanteil unterhalb der erfindungsgemäßen Grenze von 50 Gewichtsprozent, so zeigen die erhaltenen Dispersionen keine ausreichende Wirkung als Verdickungsmittel, und es ist die Reaktion-selbst unter Beachtung der anderen erfindungsgemäßen Parameterthermisch nicht mehr beherrschbar. Wird andererseits der Anteil an der Carbonsäure >60 Gewichtsprozent gewählt, so kommt es zu einer starken Koagulatbildung. Ein Austausch der Methacrylsäure durch andere Carbonsäuren, wie z. B. Acrylsäure, führt zu unbrauchbaren Produkten.

Um die Reaktionsgeschwindigkeit sowie die entstehende Reaktionswärme in einer für die Praxis handhabbaren Größenordnung zu halten, sind weitere Parameter entscheidend für das erfindungsgemäße Verfahren.

So ist es wesentlich, das Phasenverhältnis Monomerengemisch:Wasser im Bereich von 1:1,7 bis 1:2,5, vorzugsweise von 1:1,8 bis 1:2,3, zu halten. Bei zu geringem Wasseranteil kann die Reaktionswärme nicht mehr hinreichend sicher abgeführt werden, und es kommt zu vermehrter Koagulatbildung.

Bei zu hohem Wasseranteil steigt überraschenderweise die Reaktionsgeschwindigkeit so stark an, daß die Polymerisation nicht mehr beherrscht werden kann.

Ein anderer wesentlicher Reaktionsparameter ist der Einsatz von basischen Verbindungen, die vorzugsweise-bezogen auf den Monomerengehalt-zu 0,05 bis 0,5 Gewichtsprozent in der Reaktionsmischung enthalten sind. Hierfür infrage kommen solche basischen Verbindungen, die wasserlöslich sind bzw. mit Methacrylsäure wasserlösliche Salze bilden, wie z. B. Ammoniak, Alkalihydroxide, Triethylamin, Mono-, Di-, Triethanolamin, Ethylendiamin, Ethylendiamin-mono-, -di-, -tri-, -tetraacetat, Diethylentriamin, Triethylentetramin, Pyridin, Piperidin, Morpholin, Pyrrolidin, Anilin sowie die jeweiligen homologen Verbindungen. Bevorzugt eingesetzt werden die organischen, Stickstoff enthaltenden basischen Verbindungen.

Als Richtmaß für die Menge an einzusetzender basischer Verbindung kann der $p_H$-Wert angesetzt werden, der sich nach Beendigung der Polymerisation im Reaktionsansatz einstellt. Dieser Wert soll im Bereich von 3,0 bis 4,4, vorzugsweise von 3,3 bis 4,1, liegen. Wird der $p_H$-Wert von 4,4 nach Beendigung der Reaktion nach oben hin überschritten, so wird eine zu lange Induktionszeit für die Reaktion, eine verstärkte Koagulatbildung sowie eine zu geringe viskositätserhöhende Wirkung bei den erhaltenen Polymerisaten beobachtet. Bei $p_H$-Werten von <3,0 läuft die Reaktion wiederum zu schnell und damit unkontrollierbar ab. Soll die Reaktion gut überschaubar ablaufen, so hat es sich als vorteilhaft erwiesen, wenn nach Beendigung der Polymerisation der $p_H$-Wert im Bereich von 3,5 bis 4,1 liegt. Die Verwendung von stickstoffhaltigen basischen Verbindungen, die mit Persulfaten als Initiator ein Redoxsystem bilden, und bei deren Verwendung nach Beendigung der Reaktion der $p_H$-Wert der Reaktionsmischung im unteren Teil des genannten Bereiches liegt, ist dann von Vorteil, wenn eine besonders starke viskositätserhöhende Wirkung der Mittel erreicht werden soll.

Als Initiatoren können die üblicherweise verwendeten, wie Peroxidisulfate, Azo-bis-carbonsäurenitril o. ä., vorzugsweise Ammoniumperoxidisulfat und Azo-bis-iso-butyronitril, eingesetzt werden. Sie werden vorzugsweise in Mengen von 0,3 bis 0,8 Gewichtsprozent, bezogen auf den Monomerengehalt, verwendet.

Zur Kontrolle des Molekulargewichtes werden dem Polymerisationsansatz Reglersubstanzen, wie Alkylmercaptane oder Dixanthogendisulfide, vorzugsweise t-Dodecylmercaptan, zugesetzt. Vorzugsweise werden die Regler in Mengen von 0,05 bis 0,5 Gewichtsprozent — bezogen auf den Monomerengehalt — zugefügt.

Als Emulgatoren kommen anionenaktive Verbindungen in Frage, die sich von starken Säuren ableiten, d. h. Alkylsulfate und -sulfonate, Olefinsulfonate, Alkylarylsulfonate, $\alpha$-Fettsäuresulfonate, Alkylphenylenoxidsulfonate, Fettalkoholpolyglykolethersulfate, Alkylphenolpolyglykolethersulfate bzw. die entsprechenden Phosphate. Gegebenenfalls können auch Gemische der genannten Emulgatoren eingesetzt werden. Bevorzugte Emulgatoren sind Dodecylbenzosulfonate. Sie werden — bezogen auf den Monomerengehalt — vorzugsweise in Mengen von 0,5 bis 3 Gewichtsprozent eingesetzt.

Die Reaktionstemperatur liegt im Bereich zwischen 35 und 60°C, vorzugsweise zwischen 40 und 50°C, wobei die Höhe der gewählten Reaktionstemperatur vom Reaktionsablauf der Polymerisation abhängig gemacht werden kann.

Das erfindungsgemäße Verfahren kann sowohl kontinuierlich wie auch diskontinuierlich durchgeführt werden. Bei Beachtung der erfindungsgemäßen Parameter ist eine optimale Verfahrensweise möglich, d. h. die Reaktion läuft schnell genug ab, um den Erfordernissen der Praxis zu genügen, ohne daß die Wärmeentwicklung zu hoch wird und die Polymerisation dann nicht mehr beherrscht werden kann.

Die nach dem erfindungsgemäßen Verfahren erhaltenen Produkte sind koagulatarme, mechanisch stabile Dispersionen mit hervorragender viskositätserhöhender Wirkung in Überzugsmitteln.

Zur Feststellung der viskositätserhöhenden Wirkung werden die in den Beispielen beschriebenen Dispersionen auf einen Feststoffgehalt von 1,5 Gewichtsprozent verdünnt. Der $p_H$-Wert wurde einheitlich auf 8,5 eingestellt. Die Viskosität wurde dann in einem Rotationsviskosimeter bei einem Schergefälle von 11 1/sec bestimmt.

Sofern nicht anders angegeben, beziehen sich alle Angaben auf das Gewicht.

Beispiel 1

In einen 12 1-Polymerisationskessel werden eingefüllt

| | | |
|---|---|---|
| 200 | Gew.-Tle. | Wasser |
| 0,1 | Gew.Tl. | Pyridin |
| 2 | Gew.-Tle. | Dodecylbenzosulfonat |
| 55 | Gew.-Tle. | Methacrylsäure |
| 15 | Gew.-Tle. | Dibutylfumarat |
| 0,2 | Gew.-Tle. | t-Dodecylmercaptan |
| 0,5 | Gew.-Tle. | Ammonium- peroxidisulfat |

Nach Spülen mit Stickstoff und Evakuieren werden 30 Gewichtsteile Butadien eingefüllt. Der Ansatz wird innerhalb von 2 Stunden auf 50°C aufgeheizt. Die Umsatzgeschwindigkeit beträgt 25%/Stunde. Die Abscheidungen im Kessel betragen 0,1%. Der Feststoffgehalt der Dispersion beträgt 33,5% der $p_H$-Wert 3,4 die Viskosität 346 mPas.

### Beispiel 2
In einen 12 1-Polymerisationskessel werden eingefüllt

| 200 | Gew.-Tle. | Wasser |
|---|---|---|
| 0,3 | Gew.-Tle. | Triethanolamin |
| 2 | Gew.-Tle. | Dodecylbenzolsulfonat |
| 55 | Gew.-Tle. | Methacrylsäure |
| 15 | Gew.-Tle. | Dibutylmaleinat |
| 0,2 | Gew.-Tle. | t-Dodecylmercaptan |
| 0,5 | Gew.-Tle. | Ammoniumperoxidisulfat |
| 30 | Gew.-Tle. | Butadien |

Die Polymerisation wird entsprechend Beispiel 1 durchlgeführt. Die Umsatzgeschwindigkeit beträgt 15%/Stunde. Die Dispersion ist koagulatfrei, der Feststoffgehalt beträgt 33,6%, der $p_H$-Wert 3,3, die Viskosität 363 mPas.

### Beispiel 3
In einen 12 1-Polymerisationskessel werden eingefüllt

| 200 | Gew.-Tle. | Wasser |
|---|---|---|
| 0,3 | Gew.-Tle. | Triethanolamin |
| 2 | Gew.-Tle. | Dodecylbenzolsulfonat |
| 2 | Gew.-Tle. | Methacrylsäure |
| 10 | Gew.-Tle. | Bis-(2-ethylhexyl)-fumarat |
| 0,2 | Gew.-Tle. | t-Dodecylmercaptan |
| 0,5 | Gew.-Tle. | Ammoniumperoxidisulfat |
| 35 | Gew.-Tle. | Butadien |

Es wird innerhalb von 2 Stunden auf 45°C aufgeheizt. Die Umsatzgeschwindigkeit beträgt 20%/Stunde. Die Dispersion ist koagulatfrei, der Feststoffgehalt beträgt 33,7%, der $p_H$-Wert 3,7, die Viskosität 604 mPas.

### Beispiel 4
In einen 12 1-Polymerisationskessel werden eingefüllt

| 200 | Gew.-Tle. | Wasser |
|---|---|---|
| 0,5 | Gew.-Tle. | Ethylendiamintetra-acetat |
| 2 | Gew.-Tle. | Dodecylbenzosulfonat |
| 55 | Gew.-Tle. | Methacrylsäure |
| 5 | Gew.-Tle. | Dibutylfumarat |
| 0,2 | Gew.-Tle. | t-Dodecylmercaptan |
| 0,5 | Gew.-Tle. | Ammonium-peroxidisulfat |
| 40 | Gew.-Tle. | Butadien |

Die Polymerisation wird entsprechend Beispiel 3 durchgeführt. Die Umsatzgeschwindigkeit beträgt 25%/Stunde. Die Dispersion ist koagulatfrei, der Feststoffgehalt beträgt 34,5%, der $p_H$-Wert 4,2, die Viskosität 1 037 mPas.

### Beispiel 5
Die Versuche I bis V entsprechen mit Ausnahme der basischen Verbindung Beispiel 1.

| Versuch | Gew.-Tle. | Basische Verbindg. | Umsatz [%/h] | Koagulatant. [%] | $p_H$ | Viskosität [mPas] |
|---|---|---|---|---|---|---|
| I | 0,05 | Triethylamin | 23 | 0,2 | 3,0 | 406 |
| II | 0,15 | Ammoniak | 21 | 0 | 3,4 | 255 |
| III | 0,1 | Natriumhydroxid | 22 | 0,2 | 3,8 | 260 |
| IV | 1,0 | Triethanolamin | 20 | 0.5 | 4,4 | 121 |
| V | 0,5 | Ethylendiamin-tetraacetat | 25 | 0,1 | 4,0 | 591 |

Beispiel 6
Die Versuche I bis IV werden gemäß Beispiel 5.V durchgeführt.

| Versuch | Methacrylsaure [%] | Butadien [%] | Dibutylfumarat [%] | Viskosität [mPas] |
|---------|--------------------|--------------|--------------------|--------------------|
| I *) | 55 | 45 | – | 398 |
| II | 55 | 40 | 5 | 1 166 |
| III | 55 | 35 | 10 | 871 |
| IV | 55 | 30 | 15 | 591 |

*) Dieser Versuch ist nicht erfindungsgemäß.

### Beispiel 7

Beispiel 7 entspricht Beispiel 5.V, jedoch werden anstelle von 0,5 Gewichtsteilen Ammoniumperoxidisulfat 0,4 Gewichtsteile Azo-bis-iso-butyronitril als Initiator eingesetzt. Die Polymerisationstemperatur beträgt 45°C. Der Koagulatanteil beträgt 0,2%, der $p_H$-Wert 3,7, die Viskosität 621 mPas; die Umsatzgeschwindigkeit liegt bei 23%/Stunde.

### Beispiel A

Beispiel A entspricht Beispiel 5.V, jedoch werden nur 40 Gewichtsteile Methacrylsäure eingesetzt, dazu 40 Gewichtsteile Butadien und 20 Gewichtsteile Dibutylfumarat. Die Umsatzgeschwindigkeit beträgt 90%/Stunde, d. h. die Reaktion wird unkontrollierbar, der Koagulatanteil der Dispersion liegt bei 0,5%, der $p_H$-Wert bei 4,8, die Viskosität fällt auf 37 mPas ab.

### Beispiel B

Beispiel B entspricht Beispiel 5.V, jedoch wird Acrylsäure anstelle von Methacrylsäure eingesetzt. Es wird ein Umsatz von nur etwa 40% erreicht. Der Ansatz koaguliert vollständig.

### Beispiel C

Beispiel C entspricht Beispiel 5.V, jedoch wird auf Dibutylfumarat als Comonomer verzichtet. Es werden 45 Gewichtsteile Butadien eingesetzt. Die Umsatzgeschwindigkeit beträgt 35%/Stunde und der Ansatz ist kaum kontrollierbar. Der $p_H$-Wert der Dispersion liegt bei 4,1, die Viskosität bei 398 mPas.

### Beispiel D

Beispiel D entspricht Beispiel 5.V, jedoch werden nur 150 Gewichtsteile Wasser eingesetzt. Der Koagulatanteil beträgt 20%. Die Umsatzgeschwindigkeit liegt bei 28%/Stunde. Der $p_H$-Wert der Dispersion liegt bei 3,9, die Viskosität bei 147 mPas.

### Beispiel E

Beispiel E entspricht Beispiel D. Jedoch werden 300 Gewichtsteile Wasser eingesetzt. Die Umsatzgeschwindigkeit beträgt 55%/Stunde und der Ansatz ist nicht kontrollierbar.

### Beispiel F

Beispiel F entspricht Beispiel 5.V, jedoch werden 1,2 Gewichtsteile Ethylendiamintetraacetat eingesetzt. Die Umsatzgeschwindigkeit beträgt 16%/Stunde. Der Koagulatanteil steigt auf 10%. Der $p_H$-Wert der Dispersion liegt bei 4,5, die Viskosität bei 185 mPas.

### Beispiel G

Beispiel G entspricht Beispiel 1, jedoch wird ohne Zusatz einer basischen Verbindung gearbeitet. Die Reaktionsgeschwindigkeit beträgt jetzt 55%/Stunde und der Ansatz ist nicht mehr kontrollierbar. Der $p_H$-Wert der Dispersion liegt bei 2,8.

Die mit Buchstaben gekennzeichneten Beispiels sind nicht erfindungsgemäß.

**Patentansprüche:**

1. Verfahren zur Herstellung eines Mischpolymerisats auf der Basis von Methacrylsäure, einem konjugierten Diolefin und dem Ester einer $\alpha,\beta$-ethylenisch ungesättigten Dicarbonsäure bei erhöhter Temperatur als viskositätserhöhendes Mittel, dadurch gekennzeichnet, daß 50 bis 60 Gewichtsprozent Methacrylsäure, 15 bis 49 Gewichtsprozent eines konjugierten Diolefins und 1 bis 25 Gewichtsprozent Fumarsäure — und/oder Maleinsäuredialkylester — mit 1 bis 8 C-Atomen in der Alkoholkomponente in wäßriger Emulsion bei einem Phasenverhältnis Monomerengemisch:Wasser von 1:1,7 bis 1:2,5 bei Temperaturen im Bereich von 35°C bis 60°C miteinander polymerisiert werden, wobei — bezogen auf den Monomerengehalt — die wäßrige Phase 0,002 bis 1 Gewichtsprozent einer basischen Verbindung, 0,05 bis 1 Gewichtsprozent eines Initiators, 0,01 bis 1 Gewichtsprozent eines Reglers sowie 0,1 bis 5 Gewichtsprozent eines Emulgators, enthält.

2. Verfahren nach Anspruch 1,
dadurch gekennzeichnet,
daß 53 bis 57 Gewichtsprozent Methacrylsäure, 28 bis 42 Gewichtsprozent Butadien und 5 bis 15 Gewichtsprozent Fumarsäuredibutylester in wäßriger Emulsion bei einem Phasenverhältnis Monomerengemisch:Wasser von 1:1,8 bis 1:2,3 miteinander polymerisiert werden, wobei — bezogen auf den Monomerengehalt — die wäßrige Phase 0,05 bis 0,5 Gewichtsprozent einer organischen, stickstoffhaltigen basischen Verbindung, 0,3 bis 0,8 Gewichtsprozent eines Initiators, 0,05 bis 0,5 Gewichtsprozent t-dodecylmercaptan als Regler sowie 0,5 bis 3 Gewichtsprozent eines Alkylbenzosulfonats als Emulgator, enthält.

**Revendications:**

1. Procédé de fabrication d'un copolymère à base d'acide méthacrylique, d'un dioléfine conjugé et de l'ester d'un acide dicarboxylique $\alpha,\beta$-éthyléniquement non saturé, à température élevée, comme agent augmentant la viscosité.
caractérisé par le fait
que 50 à 60% en poids d'acide méthacrylique, 15 à 49% en poids d'un dioléfine conjugué et 1 à 25% en poids de dialkylester de l'acide fumarique et/ou de l'acide maléique dont le composant alcoolique est constitué de I à 8 atomes de C sont copolymérisés en émulsion aqueuse à un rapport des phases mélange de monomères: eau de 1:1,7 à 1:2,5 et une plage de températures de 35°C à 60°C, la phase aqueuse renfermant — par rapport à la teneur en monomères — 0,02 à 1% en poids d'un composé basique, 0,05 à 1% en poids d'un initiateur, 0,01 à 1% en poids d'un modificateur ainsi que 0,1 à 5% en poids d'un émulsifiant.

2. Procédé selon revendication 1
caractérisé par le fait
que 53 à 57% en poids d'acide méthacrylique, 28 à 42% en poids de butadiène et 5 à 15% en poids d'ester dibutylique de l'acide fumarique sont copolymérisés en émulsion aqueuse à un rapport des phases mélange de monomères: eau de 1:1,8 à 1:2,3, la phase aqueuse renfermant — par rapport à la teneur en monomères — 0,05 à 0,5% en poids d'un composé basique organique contenant de l'azote, 0,3 à 0,8% en poids d'un initiateur, 0,05 à 0,5% en poids de tert.-Dodécylmercaptan comme modificateur ainsi que 0,5 à 3% en poids d'un alkylbenzènesulfonate comme émulsifiant.

**Claims:**

1. A process for the production of a copolymer based on methacrylic acid, a conjugated diolefin and the ester of an $\alpha,\beta$-ethylenically unsaturated dicarbonic acid at elevated temperature as viscosity increasing agent, comprising copolymerization of 50 to 60 wt. % of methacrylic acid, 15 to 49 wt. % of a conjugated diolefin and 1 to 25 wt. % of fumaric acid dialkyl ester and/or maleic acid dialkyl ester with 1 to 8 C-atoms in the alcohol component in aqueous emulsion at a phase ratio monomer mixture: water of 1:1.7 to 1:2.5 at temperatures in the range of 35°C to 60°C, whereby — related to the monomer content — the aqueous phase contains 0.02 to 1 wt. % of a basic compound, 0.05 to 1 wt. % of an initiator, 0.01 to 1 wt. % of a modifier as well as 0.1 to 5 wt. % of an emulsifier.

2. A process as claimed in claim 1, comprising copolymerization of 53 to 57 wt. % of methacrylic acid, 28 to 42 wt. % of butadiene and 5 to 15 wt. % of fumaric dibutyl ester in aqueous emulsion at a phase ratio monomer mixture:water of 1:1.8 to 1:2.3, whereby — related to the monomer content — the aqueous phase contains 0.05 to 0.5 wt. % of an organic, nitrogen-containing basic compound, 0.3 to 0.8 wt. % of an initiator, 0.05 to 0.5 wt. % of t-dodecyl mercaptan as modifier as well as 0.5 to 3 wt. % of an alkyl benzene sulphonate as emulsifier.